# EUROPEAN PATENT APPLICATION

(11) **EP 2 362 164 A2**
(43) Date of publication of application: **31.08.2011**
(21) Application number: 11152980.6
(22) Date of filing: 02.02.2011
(51) Int. Cl.: F25B 30/02

(54) **Heat pump system and control method thereof**

(30) Priority: 25.02.2010 KR 20100016918
(71) Applicant: Samsung Electronics Co., Ltd., Suwon-si, Gyeonggi-do 506-762 (KR)
(72) Inventor: Kim, Sung Goo, Seoul (KR); Oh, Jae Hyuk, Gyeonggi-do (KR); Jeong, Dong Woon, Gyeonggi-do (KR); Park, Chang Seo, Gyeonggi-do (KR)
(74) Representative: Grünecker, Kinkeldey, Stockmair & Schwanhäusser Anwaltssozietät

(57) **Abstract**

A heat pump system (1), the operation of which is controlled using a temperature difference between a water inlet and a water outlet of a heat exchanger (20), exchanging heat between a refrigerant and water, and a control method thereof. The heat pump system includes temperature sensors (23a,23b) installed on a water circulation pipe unit at water inlet and outlet sides of a heat exchanger, and heats a load to a set temperature by controlling a compressor (14) or an expander (16) according to a difference between temperatures sensed by the temperature sensors. Here, a temperature of water transmitted to the load is set to be greater than a target load temperature by a reference value, and if the temperature difference is smaller than a designated value, the operation of the heat pump system is stopped.

## Description

### BACKGROUND

### 1. Field

Embodiments relate to a heat pump system which supplies heat to a heating load or a hot water load using a heat pump, and a control method thereof.

### 2. Description of the Related Art

In general, a heat pump system uses heat of a heat pump, including a compressor, an outdoor air exchanger, an expander, a water-refrigerant heat exchanger, and an indoor heat exchanger, to heat an indoor floor or to cool and heat indoor air.

Particularly, the heat pump system may cool and heat an indoor space or may heat water in a water tank using a water pipe through which cold water or a hot water passes. Here, the temperature of the water tank is controlled using a temperature sensor installed at the water tank to heat water in the water tank to supply hot water.

If a customer having used a water tank without a temperature sensor purchases only an outdoor unit and an indoor unit, the temperature of the water tank may not be controlled. Therefore, in order to control the temperature of the water tank, the costumer needs to purchase a new water tank with a temperature sensor.

### SUMMARY

Therefore, it is an aspect to provide a heat pump system, the operation of which is controlled using a temperature difference between a water inlet and a water outlet of a heat exchanger, exchanging heat between a refrigerant and water, and a control method thereof.

Additional aspects will be set forth in part in the description which follows and, in part, will be apparent from the description, or may be learned by practice of the invention.

In accordance with one aspect, a heat pump system includes a compressor to compress a refrigerant into a high-temperature and high-pressure state, a refrigerant circulation pipe unit to circulate the refrigerant, a first heat exchanger to exchange heat between the refrigerant and water, a water circulation pipe unit to circulate the water heated or cooled by the first heat exchanger toward a load, an expander to expand the refrigerant into a low-temperature and low-pressure state, a second heat exchanger to exchange heat between the refrigerant and air, a first temperature sensor installed at the water circulation pipe unit to sense a temperature of the water transmitted to the load, a second temperature sensor installed at the water circulation pipe unit to sense a temperature of the water transmitted to the first heat exchanger, and a control unit to control the compressor or the expander according to a difference between the temperature sensed by the first temperature sensor and the temperature sensed by the second temperature sensor so as to set a temperature of the load to a first set temperature, which is a target temperature.

In the control of the compressor or the expander according to the difference between the temperature sensed by the first temperature sensor and the temperature sensed by the second temperature sensor so as to set the temperature of the load to the first set temperature, the control unit may increase an rpm of the compressor and an opening degree of the expander, if the difference between the temperature sensed by the first temperature sensor and the temperature sensed by the second temperature sensor is increased, and the control unit may decrease the rpm of the compressor and the opening degree of the expander, if the difference between the temperature sensed by the first temperature sensor and the temperature sensed by the second temperature sensor is decreased.

The first temperature sensor or the second temperature sensor may be installed at a part of the water circulation pipe unit adjacent to the first heat exchanger. The load may be a hot water tank to supply hot water.

The control unit may determine a second set temperature, which is a temperature of a water outlet side of the first heat exchanger, according to the first set temperature, and control the compressor or the expander so as to adjust the temperature of the water outlet side of the first heat exchanger to the second set temperature.

Upon judging that the second set temperature does not exceed the maximum temperature suppliable by the heat pump system, the control unit may set the second set temperature to be greater than the first set temperature by a first reference value. If the difference between the temperature sensed by the first temperature sensor and the temperature sensed by the second temperature sensor is lower than a second reference value, the control unit may stop the operation of the heat pump system.

Further, upon judging that the second set temperature exceeds the maximum temperature suppliable by the heat pump system, the control unit may set the second set temperature as the maximum temperature suppliable by the heat pump system.

The heat pump system may further include a first sub heater to heat the water circulation pipe unit, or a second sub heater to heat the hot water tank, and upon judging that the second set temperature exceeds the maximum temperature suppliable by the heat pump system, the control unit may operate the first sub heater or the second sub heater. If the difference between the temperature sensed by the first temperature sensor and the temperature sensed by the second temperature sensor is lower than a second reference value, the control unit may stop the operation of the heat pump system.

In accordance with another aspect, a control method of a heat pump system, which has a compressor, an expander, a refrigerant circulation pipe unit, a water circulation pipe unit, a first heat exchanger to exchange heat between the refrigerant and water, a second heat exchanger to exchange heat between the refrigerant and air, a first temperature sensor installed at a part of the water circulation pipe unit at a water outlet side of the first heat exchanger, and a second temperature sensor installed at another part of the water circulation pipe unit at a water inlet side of the first heat exchanger, and circulates the water through the water circulation pipe unit to heat or cool a load, includes determining a second set temperature, which is a temperature of the water outlet side of the first heat exchanger, according to a first set temperature, which is a target temperature of the load, adjusting a temperature of the water at the water outlet side of the first heat exchanger to the second set temperature, and then circulating the water through the water circulation pipe unit, sensing the temperature of the water at the water outlet side of the first heat exchanger through the first temperature sensor, sensing a temperature of the water at the water inlet side of the first heat exchanger through the second temperature sensor, and controlling the compressor or the expander according to a difference between the temperature sensed by the first temperature sensor and the temperature sensed by the second temperature sensor so as to maintain the temperature of the water at the water outlet side of the first heat exchanger at the second set temperature.

The control of the compressor or the expander according to the difference between the temperature sensed by the first temperature sensor and the temperature sensed by the second temperature sensor so as to maintain the temperature of the water at the water outlet side of the first heat exchanger at the second set temperature may include increasing an rpm of the compressor and an opening degree of the expander, if the difference between the temperature sensed by the first temperature sensor and the temperature sensed by the second temperature sensor is increased, and decreasing the rpm of the compressor and the opening degree of the expander, if the difference between the temperature sensed by the first temperature sensor and the temperature sensed by the second temperature sensor is decreased.

Upon judging that the second set temperature does not exceed the maximum temperature suppliable by the heat pump system, the second set temperature may be set to be greater than the first set temperature by a first reference value. If the difference between the temperature sensed by the first temperature sensor and the temperature sensed by the second temperature sensor is lower than a second reference value, the operation of the heat pump system may be stopped.

Upon judging that the second set temperature exceeds the maximum temperature suppliable by the heat pump system, the second set temperature may be set as the maximum temperature suppliable by the heat pump system. If the difference between the temperature sensed by the first temperature sensor and the temperature sensed by the second temperature sensor is lower than a second reference value, the operation of the heat pump system may be stopped.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a schematic view illustrating the overall configuration of a heat pump system in accordance with one embodiment;
FIG. 2 is a detailed view illustrating the overall configuration of the heat pump system in accordance with the embodiment;
FIG. 3 is a block diagram of a control unit of the heat pump system in accordance with the embodiment;
FIG. 4 is a detailed view illustrating the overall configuration of a heat pump system in accordance with a further embodiment;
FIG. 5 is a detailed view illustrating the overall configuration of a heat pump system in accordance with another embodiment;
FIG. 6 is a flow chart illustrating a control method of a heat pump system in accordance with one embodiment, in a hot water mode;
FIG. 7 is a flow chart illustrating a control method of the heat pump system in accordance with the embodiment, in a heating mode; and
FIG. 8 is a flow chart illustrating a method of determining a second set temperature of the heat pump system in accordance with the embodiment.

### DETAILED DESCRIPTION

Reference will now be made in detail to the embodiments, examples of which are illustrated in the accompanying drawings, wherein like reference numerals refer to like elements throughout.

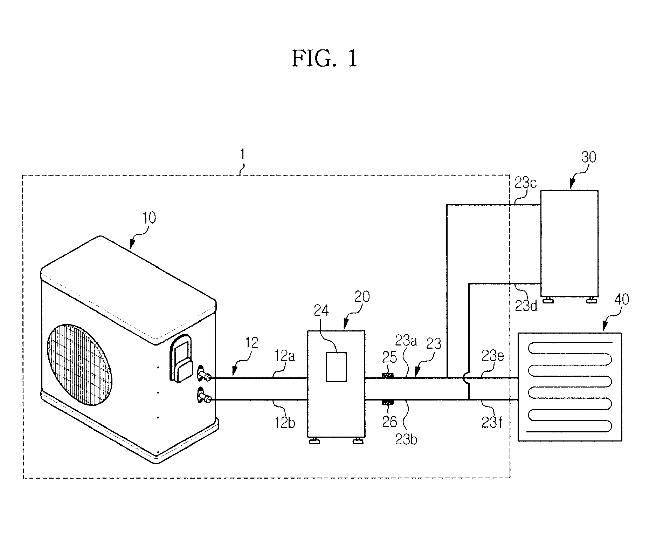

FIG. 1 is a schematic view illustrating the overall configuration of a heat pump system in accordance with one embodiment.

A heat pump system 1 in accordance with this embodiment includes an outdoor unit 10, an indoor unit 20, a refrigerant circulation pipe unit 12 connected between the outdoor unit 10 and the indoor unit 20, a water circulation pipe unit 23 connected between the indoor unit 20 and loads 30 and 40, and a first temperature sensor 25 and a second temperature sensor 26 installed at the water circulation pipe unit 23 adjacent to the indoor unit 20. FIG. 1 illustrates a hot water tank 30 to supply hot water and a heating load 40, such as an indoor floor, as examples of the loads.

The refrigerant circulation pipe unit 12 includes a first refrigerant pipe 12a through which a refrigerant flows from the outdoor unit 10 to the indoor unit 20, and a second refrigerant pipe 12b through which the refrigerant flows from the indoor unit 20 to the outdoor unit 10.

The water circulation pipe unit 23 includes a first water pipe 23a enabling water discharged from the indoor unit 20 to flow therethrough, a second water pipe 23b enabling water introduced into the indoor unit 20 to flow therethrough, a third water pipe 23c enabling water transmitted through the first water pipe 23a to flow to the hot water tank 30, a fourth water pipe 23d enabling water discharged from the water tank 30 to flow therethrough, a fifth water pipe 23e enabling water transmitted through the first water pipe 23a to flow to the heating load 40, and a sixth water pipe 23f enabling water discharged from the heating load 40 to flow therethrough.

A control unit 24 to control the operation of the heat pump system 1 is installed in the indoor unit 320. The first temperature sensor 25 is installed at the first water pipe 23a, and the second temperature sensor 26 is installed on the second water pipe 23b. The first temperature sensor 25 serves to sense a temperature of water flowing from the indoor unit 20 to the loads 30 and 40, and the second temperature sensor 26 serves to sense a temperature of water flowing from the loads 30 and 40 to the indoor unit 20.

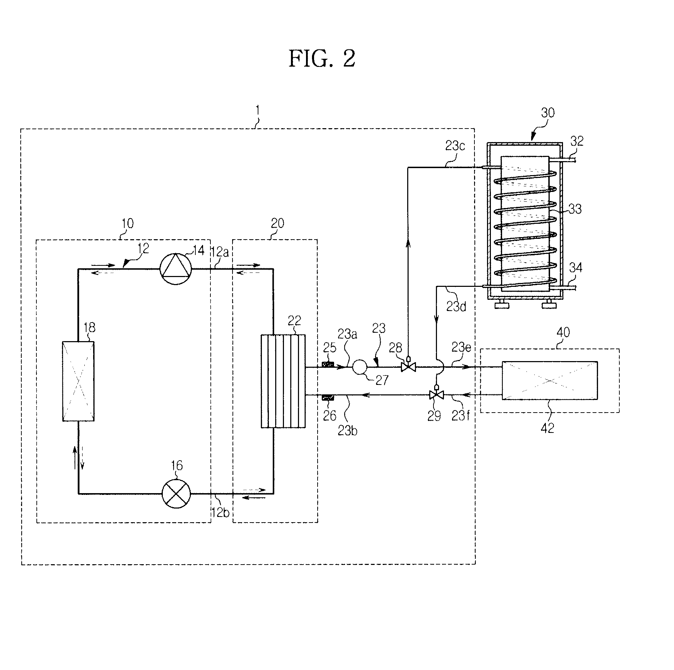

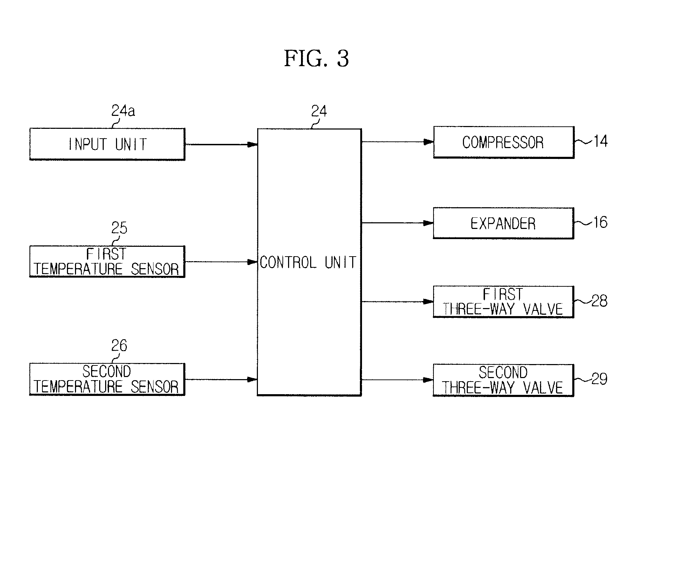

Hereinafter, with reference to FIGS. 2 and 3, the configuration and operation of the heat pump system 1 in accordance with this embodiment will be described in detail.

FIG. 2 is a detailed view illustrating the overall configuration of the heat pump system in accordance with this embodiment.

The heat pump system 1 in accordance with this embodiment cools or heats water circulated through the water circulation pipe unit 23 using the outdoor unit 10 and the indoor unit 20, thus performing a cooling operation, a heating operation, and a hot water operation. The heat pump system 1 includes the outdoor unit 10 installed outdoors, and the indoor unit 20 installed indoors.

The outdoor unit 10 includes a compressor 14, an expander 16, a second heat exchanger 18, and the refrigerant circulation pipe unit 12. The indoor unit 20 includes a first heat exchanger 22. The hot water tank 30 includes a cistern 33, and the heating load 40 includes a third heat exchanger 42.

The compressor 14 serves to compress the refrigerant from a low-temperature and low-pressure gaseous state into a high-temperature and high-pressure gaseous state, and may include a variable capacity compressor having a compression capacity which is variable according to the loads 30 and 40.

Further, the compressor 14 may include an inverter compressor having a compression capacity which is variable according to input frequencies, or a combination of a plurality of constant speed compressors, each of which has a constant compression capacity. The compressor 14 is connected to the first heat exchanger 22 of the indoor unit 20 through the first refrigerant pipe 12a.

The first heat exchanger 22 serves to exchange heat between the refrigerant in the high-temperature and high-pressure state compressed by the compressor 14 and water in the water circulation pipe unit 23 to heat the water, or to exchange heat between the refrigerant in a low-temperature and low-pressure state expanded by the expander 16, which will be described later, and water in the water circulation pipe unit 23 to cool the water. Although not shown in the drawings, the refrigerant circulation pipe unit 12 and the water circulation pipe unit 23, each of which forms a closed loop, cross each other within the first heat exchanger 22 so as to exchange heat with each other. The first heat exchanger 22 is connected to the expander 16 of the outdoor unit 16 through the second refrigerant pipe 12b.

The expander 16 is a kind of a variable expansion device, which expands or intercepts the refrigerant to pass through the first heat exchanger 22 or the second heat exchanger 18, which will be described later, and includes an electronic expansion valve, such as a linear expansion valve (LEV), an opening value of which is variable, so as to adjust an amount of the refrigerant. The expander 16 is connected to the second heat exchanger 18 of the indoor unit 10 through the refrigerant circulation pipe unit 12.

The second heat exchanger 18 serves to exchange heat between the refrigerant having passed through the compressor 14 or the expander 16 and outdoor air. The second heat exchanger 18 may include a fan (not shown) to exchange heat between the refrigerant and the outdoor air.

The refrigerant is circulated through the refrigerant circulation pipe unit 12 via the compressor 14, the first heat exchanger 22, the expander 16, and the second heat exchanger 18, as described above, thus heating of cooling water in the water circulation pipe unit 23 crossing the refrigerant circulation pipe unit 12 within the first heat exchanger 22.

In FIG. 2, arrows shown in a solid line around the refrigerant circulation pipe unit 12 represent circulation of the refrigerant in the heating mode or the hot water mode in which water in the water circulation pipe unit 23 within the first heat exchanger 22 is heated, and arrows shown in a dotted line represent circulation of the refrigerant in the cooling mode in which water in the water circulation pipe unit 23 within the first heat exchanger 22 is cooled.

The heated water is circulated via the heating load 40 or the hot water tank 30, i.e., the hot water load, through the water circulation pipe unit 23. That is, in case of the heating load 40, such as an indoor floor, an indoor temperature is maintained at a desired temperature by heating or cooling water, and in case of the water tank 30, water supplied to the water tank 30 is heated to a desired temperature by heating water. A user may use the heated water for a required purpose.

As shown in FIG. 2, the water circulation pipe unit 23 is connected to the first heat exchanger 22, the water tank 30, and the heating load 40. The respective pipes of the water circulation pipe unit 23 are described already with reference to FIG. 1, and a detailed description thereof will thus be omitted. A pump 27 to circulate water in the water circulation pipe unit 23 is installed on the water circulation pipe unit 23. Further, as described above, the first temperature sensor 25 and the second temperature sensor 26 are installed at positions of the water circulation pipe unit 23 adjacent to the first heat exchanger 22.

A first three-way valve 28 is installed at a point where the first water pipe 23a of the water circulation pipe unit 23 is branched off into the third water pipe 23c and the fifth water pipe 23e, and a second three-way valve 29 is installed at a point where the second water pipe 23b of the water circulation pipe unit 23 is branched off into the fourth water pipe 23d and the sixth water pipe 23f. Water in the water circulation pipe unit 23 may be selectively circulated toward the hot water tank 30 or the heating load 40 using the first three-way valve 28 and the second three-way valve 29.

The hot water tank 30 is connected to the third water pipe 23c and the fourth water pipe 23d of the water circulation pipe unit 23, and includes a water inlet pipe 32 through which external water available for use is introduced into the hot water tank 30, and a water outlet pipe 34 through which the external water available for use in the hot water tank 30 is discharged to the outside. The cistern 33 connected to the water inlet pipe 32 to store the external water available for use is installed in the hot water tank 30, and the water outlet pipe 34 is connected to the lower part of the cistern 33. As shown in FIG. 2, the water circulation pipe unit 23 is wound the outer surface of the cylindrical cistern 33 so as to surround the cistern 33. Through this structure, the water in the water circulation pipe unit 23 and the external water available for use in the cistern 33 exchanges heat with each other. That is, the heated water in the water circulation pipe unit 23 supplies heat to the external water available for use stored in the cistern 33 of the water tank 30, thereby heating the external water available for use stored in the cistern 33 of the water tank 30. When the external water available for use in the water tank 30 is heated, the user may use hot water by opening the outlet pipe 34.

FIG. 3 is a block diagram of the control unit of the heat pump system in accordance with the embodiment of the present invention.

As shown in FIG. 3, the control unit 24 to control the operation of the heat pump system 1 is installed in the indoor unit 20. Of course, the control unit 24 may be installed in the outdoor unit 10 or the load 30 or 40 according to user convenience. The heat pump system 1 in accordance with this embodiment illustrates the control unit 24 installed in the indoor unit 20 provided indoors.

An input unit 24a enabling a user to set operating conditions of the heat pump system 1 is installed on the control unit 24. That is, through the input unit 24a, the user selects the hot water mode to heat the hot water tank 30 or the heating mode to heat or cool the heating load 40, and inputs a set temperature of the hot water tank 30 or the heating load 40 in the selected hot water mode or heating mode.

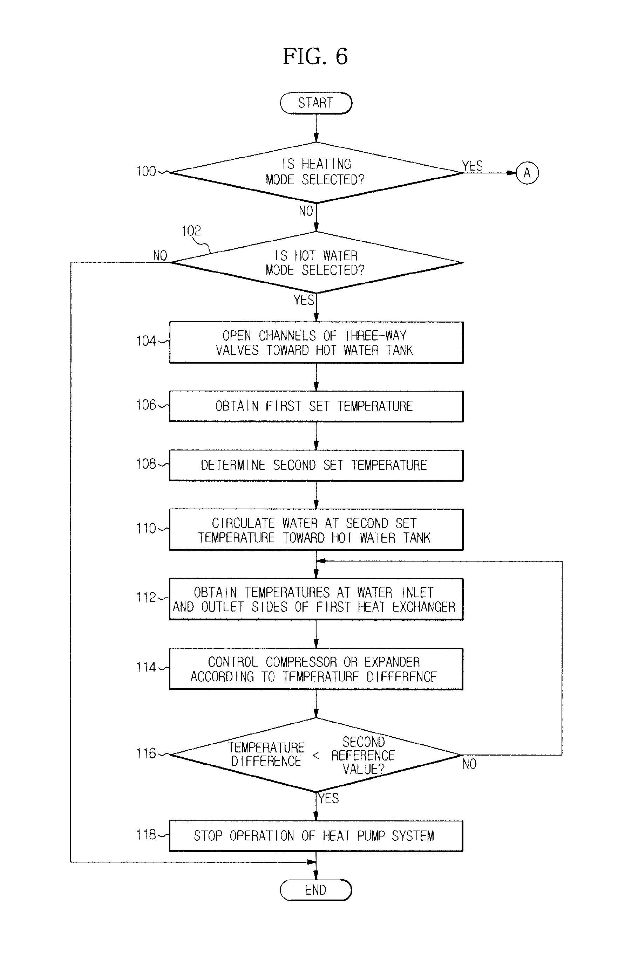

Further, the control unit 24 obtains the temperatures sensed by the first temperature sensor 25 and the second temperature sensor 26 installed on the water circulation pipe unit 23. The control unit 24 controls operations of the compressor 14, the expander 16, the first three-way valve 28, and the second three-way valve 29 based on the data input through the input unit 24a and the sensed temperature data. The detailed operation of the control unit 24 will be described later in detail with reference to FIGS. 6 to 8.

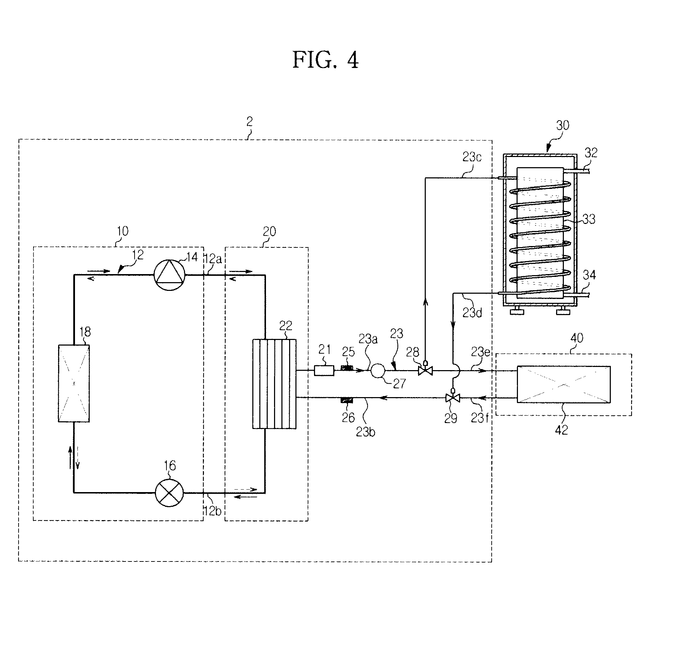

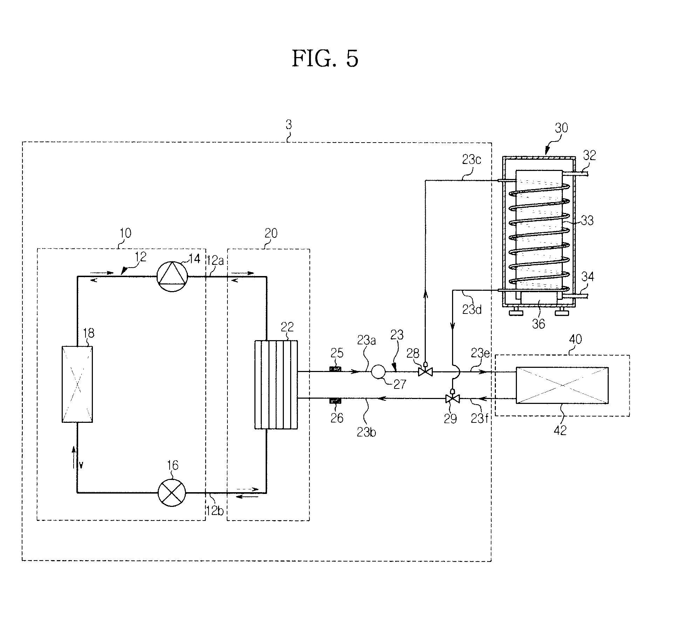

FIG. 4 is a detailed view illustrating the overall configuration of a heat pump system in accordance with a further embodiment, and FIG. 5 is a detailed view illustrating the overall configuration of a heat pump system in accordance with another embodiment.

That is, FIG. 4 illustrates a heat pump system 2 formed by adding a first sub heater 21 to the first water pipe 23a in the heat pump system 1 of FIG. 2, and FIG. 5 illustrates a heat pump system 3 formed by adding a second sub heater 36 to heat the hot water tank 30 to the heat pump system 1 of FIG. 2. The heat pump system 2 or 3 of FIG. 4 or 5 further includes the first sub heater 21 or the second sub eater 36 as an additional heat source to adjust the temperature of the load 30 or 40 to a set temperature, if the maximum temperature suppliable by the heat pump system 2 or 3 is lower than the set temperature. The detailed operations of the heat pump systems 2 and 3 will be described later in detail with reference to FIGS. 6 to 8.

Hereinafter, with reference to FIGS. 6 to 8, the detailed operations of the heat pump systems 1, 2, and 3 in accordance with the embodiments of the present invention will be described in detail. FIG. 6 is a flow chart illustrating a control method of a heat pump system in accordance with one embodiment of the present invention, in the hot water mode.

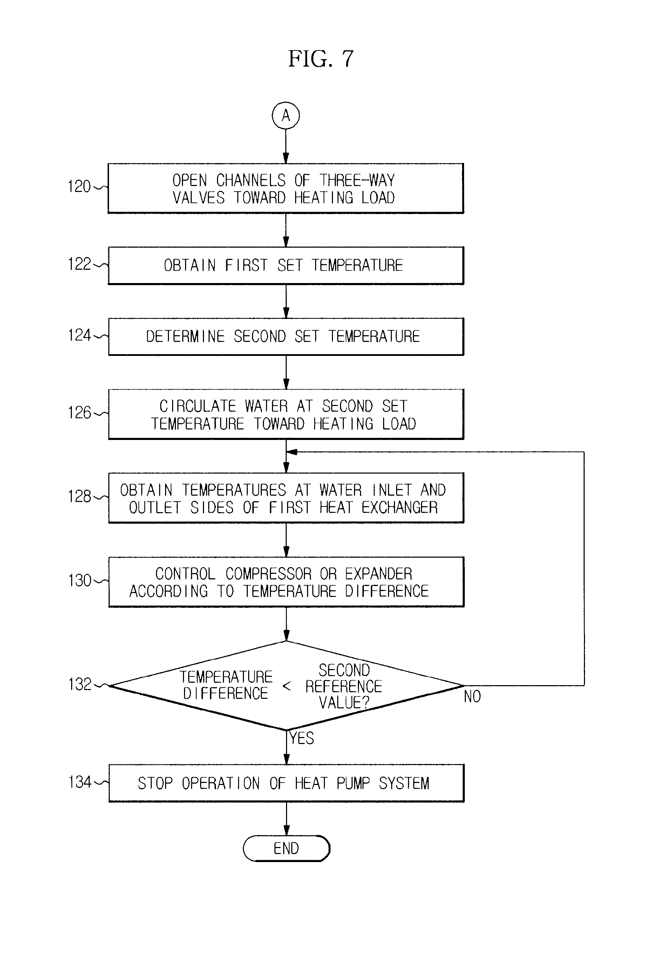

The control unit 24 judges whether or not a mode input by a user through the input unit 24a of the control unit 24 is the heating mode (operation 100). If it is judged that the heating mode is selected by the user, the heat pump system 1 is operated in the heating mode, and a detailed description thereof will be given later with reference to FIG. 7.

If it is judged that the heating mode is not selected by the user, the control unit 24 judges whether or not the hot water mode is selected (operation 102). If it is judged that the hot water mode is not selected, the control unit 24 judges that no input is present and does not perform the operation of the heat pump system 1. If it is judged that the hot water mode is selected, the control unit opens channels of the first three-way valve 28 and the second three-way valve 29 toward the hot water tank 30 and closes channels of the first three-way valve 28 and the second three-way valve 29 toward the heating load 40 (operation 104). Thereby, water in the water circulation pipe unit 23 is circulated only toward the hot water tank 30.

Thereafter, the control unit 24 obtains a first set temperature, which is a target heating temperature of the hot water tank 30 input by the user through the input unit 24a (operation 106). When the first set temperature is obtained, the control unit 24 determines a second set temperature, which is a temperature of the water circulation pipe unit 23 at the water outlet side of the first heat exchanger 22 by an algorithm predetermined based on the first set temperature (operation 108).

When the second set temperature is determined, the control unit 24 heats water to the second set temperature and circulates the heated water toward the hot water tank 30 (operation 110). That is, the control unit 24 controls the compressor 14 and the expander 16 so as to vary compressibility and an amount of the refrigerant, adjusts an amount of heat exchanged with water in the first heat exchanger 22, and thus sets the temperature of water discharged from the first water pipe 23a to the second set temperature. Then, the control unit 24 drives the pump 27 so as to enable the water in the water circulation pipe unit 23 to be circulated toward the hot water tank 30.

When the water heated to the second set temperature passes through the hot water tank 30, the water exchanges heat with the external water available for use stored in the hot water tank 30. Thereby, the external water available for use in the hot water tank 30 is heated, and the water in the water circulation pipe unit 23 loses heat, sequentially passes through the fourth water pipe 23d and the second water pipe 23b, and then is again introduced into the first heat exchanger 22.

Here, the control unit 24 obtains temperatures at the water inlet and outlet sides of the first heat exchanger 22, which are sensed by the first temperature sensor 25 and the second temperature sensor 26 (operation 112). For convenience, the temperature sensed by the first temperature sensor 25 is defined as α, the temperature sensed by the second temperature sensor 26 is defined as β, and a difference between the two temperatures α and β is defined as δ (δ=α-β). Since the water in the water circulation pipe unit 23 loses heat due to the heating of the external water available for use in the water tank 30, α is greater than β and thus δ has a positive value. However, if the second sub heater 36 to heat the hot water tank 30 is used, δ may have a negative value and a detailed description thereof will be given later.

The control unit 24 controls the compressor 14 or the expander 16 according to the value of δ (operation 114). That is, the control unit 24 controls an rpm of the compressor 14 or an opening degree of the expander 16 according to the value of δ so as to maintain the temperature at the water outlet side of the first heat exchanger 22 at the second set temperature. The control unit 24 increases the rpm of the compressor 14 and the opening degree of the expander 16, if the value of δ is great, and decreases the rpm of the compressor 14 and the opening degree of the expander 16, if the value of δ is small. The control of the compressor 14 or the expander 16 according to the value of δ may be variably determined due to specifications of the heat pump system 1, such as specifications of the compressor 14 or the expander 14, the amount of the refrigerant, and the amount of water.

The water is continuously heated by the first heat exchanger 22 and is circulated through the water circulation pipe unit 23, thereby heating the external water available for use in the hot water tank 30. Here, the control unit 24 judges whether of not the value of δ is smaller than a predetermined second reference value (operation 116). If the value of δ is greater than the predetermined second reference value, the control unit 24 again obtains temperatures at the water inlet and outlet sides of the first heat exchanger 22 (operation 112).

If the value of δ is smaller than the second reference value, the control unit 24 stops the operation of the heat pump system 1 (operation 118). That is, the control unit 24 stops the operations of the compressor 14, the expander 16, and the pump 27, and closes the channels of the first three-way valve 28 and the second three-way valve 29 toward the hot water tank 30. The reason for the above control is as follows.

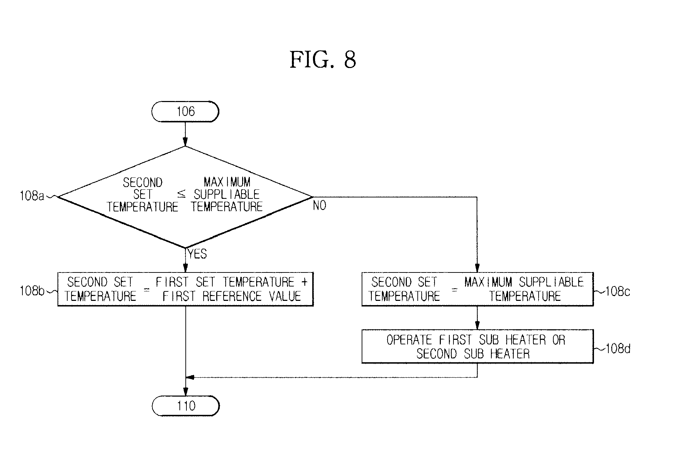

The large value of δ means that the hot water tank 30, i.e., the hot water load, performs great heat exchange, and the small value of δ means that the hot water tank 30 performs less heat exchange. Further, the second set temperature is generally set to be slightly greater than the first set temperature, and a detailed description thereof will be given later with reference to FIG. 8. It may be judged that the external water available for use in the hot water tank 30 is set to the first set temperature according to the value of δ determined by the first set temperature and the second set temperature. Therefore, since it is judged that the hot water tank 30 is set to the first set temperature, the operation of the heat pump system 1 is stopped.

For example, when the user inputs 40 as the first set temperature, the control unit 24 determines the second set temperature to be 45 which is higher than 40! . In this case, assuming that the value of δ is set to 2, if the temperature at the water inlet side of the first heat exchanger 22 reaches 43, the control unit 24 judges that the water tank 30 reaches the first set temperature of 40, and then stops the operation of the heat pump system 1.

That is, when the heat pump system 1 supplies water of 45 to the hot water tank 30, the external water available for use in the hot water tank 30 is continuously heated to the normal temperature of 25 and the temperature β at the water inlet side of the first heat exchanger 22 is continuously raised. If it is judged that the external water available for use in the hot water tank 30 reaches 40 when the value of β reaches 43 by the predetermined algorithm, the value of δ is set to 2 as described above.

FIG. 7 is a flow chart illustrating a control method of the heat pump system in accordance with the embodiment, in the heating mode.

The control method of FIG. 7 is almost identical with the control method of FIG. 6. That is, the control method of FIG. 7 differs from the control method of FIG. 6 in that, in the control method of FIG. 7, the load is changed from the hot water tank 30 to the heating load 40 and water in the water circulation pipe unit 23 within the first heat exchanger 22 is cooled as well as heated.

If it is judged that the heating mode is selected by the user through the input unit 24a in FIG. 6, the control unit 24 opens the channels of the first three-way valve 28 and the second three-way valve 29 toward the heating load 30 and closes the channels of the first three-way valve 28 and the second three-way valve 29 toward the hot water tank 30 (operation 120). Thereby, the water in the water circulation pipe unit 23 is circulated only toward the heating load 40.

Thereafter, the control unit 24 obtains a first set temperature, which is a target heating temperature of the heating load 40 input by the user through the input unit 24a (operation 122). When the first set temperature is obtained, the control unit 24 determines a second set temperature, which is a temperature of the water circulation pipe unit 23 at the water outlet side of the first heat exchanger 22 by an algorithm predetermined based on the first set temperature (operation 124).

When the second set temperature is determined, the control unit 24 heats water to the second set temperature and circulates the heated water toward the heating load 40 (operation 126). That is, the control unit 24 controls the compressor 14 and the expander 16 so as to vary compressibility and an amount of the refrigerant, adjusts an amount of heat exchanged with water in the first heat exchanger 22, and thus sets the temperature of water discharged from the first water pipe 23a to the second set temperature. Further, the control unit 24 drives the pump 27 so as to enable the water in the water circulation pipe unit 23 to be circulated toward the heating load 40.

When the water heated to the second set temperature passes through the heating load 40, the water exchanges heat with the heating load 40. Thereby, the heating load 40 is heated, and the water in the water circulation pipe unit 23 loses heat, sequentially passes through the sixth water pipe 23f and the second water pipe 23b, and then is again introduced into the first heat exchanger 22.

Here, the control unit 24 obtains temperatures at the water inlet and outlet sides of the first heat exchanger 22, which are sensed by the first temperature sensor 25 and the second temperature sensor 26 (operation 128). As described above, the temperature sensed by the first temperature sensor 25 is defined as α, the temperature sensed by the second temperature sensor 26 is defined as β, and a difference between the two temperatures α and β is defined as δ (δ=α-β).

The control unit 24 controls the compressor 14 or the expander 16 according to the value of δ (operation 130). That is, the control unit 24 controls an rpm of the compressor 14 or an opening degree of the expander 16 according to the value of δ so as to maintain the temperature at the water outlet side of the first heat exchanger 22 at the second set temperature.

The water is continuously adjusted to the second set temperature by the first heat exchanger 22 and is circulated through the water circulation pipe unit 23, thereby adjusting the temperature of the heating load 40 to the first set temperature. Here, the control unit 24 judges whether of not the value of δ is smaller than a predetermined second reference value (operation 132). If the value of δ is greater than the predetermined second reference value, the control unit 24 again obtains temperatures at the water inlet and outlet sides of the first heat exchanger 22 (operation 128).

If the value of δ is smaller than the second reference value, the control unit 24 stops the operation of the heat pump system 1 (operation 134). That is, the control unit 24 stops the operations of the compressor 14, the expander 16, and the pump 27, and closes the channels of the first three-way valve 28 and the second three-way valve 29 toward the heating load 40.

FIG. 8 is a flow chart illustrating a method of determining the second set temperature of the heat pump system in accordance with the embodiment of the present invention.

When the control unit 24 obtains the first set temperature in operation 106 of FIG. 6, the control unit 24 determines the second set temperature based on the first set temperature (operation 108). Hereinafter, determination of the second set temperature will be described in detail.

The control unit 24 judges whether or not the second set temperature does not exceed the maximum temperature suppliable by the heat pump system 1 (operation 108a). If it is judged that the second set temperature does not exceed the maximum temperature suppliable by the heat pump system 1, the control unit 24 determines the second set temperature to be a value greater than the first set temperature by the first reference value (operation 108b). The reason for the above determination is as follows.

In general, the maximum temperature suppliable by the heat pump system 1, 2, or 3, i.e., the temperature at the water outlet side of the first heat exchanger 22 has a regular upper limit. That is, the water in the water circulation pipe unit 23 is adjusted to the second set temperature calculated by the algorithm predetermined based on the first set temperature, which is a temperature of the load required by a user, and the control unit 24 judges whether or not the calculated second set temperature is a temperature which is suppliable by the heat pump system 1, 2, or 3.

If it is judged that the second set temperature does not exceed the maximum temperature suppliable by the heat pump system 1, as described above, the control unit 24 circulates the water in the water circulation pipe unit 23 adjusted to the second set temperature determined to be the value greater than the first set temperature by the first reference value. The reason for this is that the water in the water circulation pipe unit 23 exchanges heat with the load 30 or 40 and thus the second set temperature is greater than the first set temperature. The first reference value may be variably determined according to specifications of the heat pump system 1 or specifications of the load 30 or 40.

For example, if the user selects 40 as the first set temperature, the control unit 24 may determine 45 which is higher than 40, as the second set temperature so as to heat the external water available for use stored in the hot water tank to 40. The judgment as to the stoppage of the operation of the heat pump system 1 is determined by whether or not the value of δ is smaller than the second reference value, as described above.

Further, if it is judged that the second set temperature exceeds the maximum temperature suppliable by the heat pump system 1, 2, or 3, the control unit 24 determines the second set temperature as the maximum temperature (operation 108c). That is, since the second set temperature calculated by the algorithm predetermined based on the first set temperature, as described, exceeds the maximum temperature suppliable by the heat pump system 1, 2, or 3, only the maximum temperature is supplied.

In this case, the control unit 24 operates the first sub heater 21 or the second sub heater 36, as shown in FIGS. 4 or 5 (operation 108d). Now, control of the operation of the heat pump system 2 if the sub heater 21 is operated and control of the operation of the heat pump system 3 if the second sub heater 36 will be respectively described as follows.

The control of the heat pump system 2 provided with the first sub heater 21 is performed through the same method as that of the heat pump system 1 of FIG. 2. That is, the control unit 24 determines the second set temperature as the maximum temperature, and circulates water toward the water outlet side of the first heat exchanger 22 through the refrigerant circulation pipe unit 23. Thereafter, the water is again heated by the first sub heater 21 to the second set temperature calculated by the algorithm predetermined based on the first set temperature, as described above, and then is supplied to the load 30 or 40. That is, the first sub heater 21 is installed between the first temperature sensor 25 and the first heat exchanger 22, and thus the temperature sensed by the first temperature sensor 25 may be set to the second set temperature calculated by the algorithm predetermined based on the first set temperature.

However, control of the heat pump system 3 provided with the second sub heater 36 is performed through a method slightly differing from that of the heat pump system 1 of FIG. 2. In this case, since the first sub heater 21 is not provided, the temperature supplied to the load 30 or 40 becomes the maximum temperature suppliable by the heat pump system 3. The second sub heater 36 installed to heat the hot water tank 30, as shown in FIG. 5, additionally supplies heat, and thus the temperature β at the water inlet side of the first heat exchanger 22 may be greater than the temperature α at the water outlet side of the first heat exchanger 22. Particularly, since the second set temperature exceeds the maximum temperature, if the temperature β is greater than the temperature α, the load 30 or 40 may be set to the first set temperature.

In this case, the control unit 24 controls the compressor 14 or the expander 16 according to the absolute value of δ, and the sign of the value of δ is considered. That is, the determination as to whether or not the operation of the heat pump system 3 is stopped is achieved by whether or not the absolute value of δ after the change of the value of δ from the positive sign to the negative sign (-) is smaller than the predetermined second reference value.

If the first sub heater 21 or the second sub heater 36, as shown in FIGS. 4 and 5, is not provided, the load 30 or 40 is not heated to the first set temperature required by the user. However, if the first sub heater 21 or the second sub heater 36 is used, the load 30 or 40 may be heated with the output of the maximum temperature suppliable by the heat pump system 1 using the same method as a conventional control method.

That is, using the above system and method, the load 30 or 40 may be adjusted to a desired temperature using the temperatures at the water inlet and outlet sides of the first heat exchanger 22 without a separate temperature sensor installed at the load 30 or 40.

As is apparent from the above description, in a heat pump system and a control method thereof in accordance with one embodiment, the operation of the heat pump system is easily controlled using a temperature difference between water inlet and outlet sides of a heat exchanger without a separate temperature sensor installed at a load, such as a hot water tank.

Further, since the heat pump system may use a conventional hot water tank not provided with a temperature sensor, a user may construct the heat pump system by adding only an outdoor unit and an indoor unit to the conventional hot water tank.

Although a few embodiments have been shown and described, it would be appreciated by those skilled in the art that changes may be made in these embodiments without departing from the principles and spirit of the invention, the scope of which is defined in the claims and their equivalents.

## Claims

1. A heat pump system comprising:
a compressor to compress a refrigerant into a high-temperature and high-pressure state;
a refrigerant circulation pipe unit to circulate the refrigerant;
a first heat exchanger to exchange heat between the refrigerant and water;
a water circulation pipe unit to circulate the water heated or cooled by the first heat exchanger toward a load;
an expander to expand the refrigerant into a low-temperature and low-pressure state;
a second heat exchanger to exchange heat between the refrigerant and air;
a first temperature sensor installed at the water circulation pipe unit to sense a temperature of the water transmitted to the load;
a second temperature sensor installed at the water circulation pipe unit to sense a temperature of the water transmitted to the first heat exchanger; and
a control unit to control the compressor or the expander according to a difference between the temperature sensed by the first temperature sensor and the temperature sensed by the second temperature sensor so as to set a temperature of the load to a first set temperature, which is a target temperature.

2. The heat pump system according to claim 1, wherein, in the control of the compressor or the expander according to the difference between the temperature sensed by the first temperature sensor and the temperature sensed by the second temperature sensor so as to set the temperature of the load to the first set temperature:
the control unit increases an rpm of the compressor and an opening degree of the expander, if the difference between the temperature sensed by the first temperature sensor and the temperature sensed by the second temperature sensor is increased; and
the control unit decreases the rpm of the compressor and the opening degree of the expander, if the difference between the temperature sensed by the first temperature sensor and the temperature sensed by the second temperature sensor is decreased.

3. The heat pump system according to claim 2, wherein the first temperature sensor or the second temperature sensor is installed at a part of the water circulation pipe unit adjacent to the first heat exchanger.

4. The heat pump system according to claim 3, wherein the load is a hot water tank to supply hot water.

5. The heat pump system according to claim 4, wherein:
the control unit determines a second set temperature, which is a temperature of a water outlet side of the first heat exchanger, according to the first set temperature; and
the control unit controls the compressor or the expander so as to adjust the temperature of the water outlet side of the first heat exchanger to the second set temperature.

6. The heat pump system according to claim 5, wherein, upon judging that the second set temperature does not exceed the maximum temperature suppliable by the heat pump system, the control unit sets the second set temperature to be greater than the first set temperature by a first reference value.

7. The heat pump system according to claim 6, wherein, if the difference between the temperature sensed by the first temperature sensor and the temperature sensed by the second temperature sensor is lower than a second reference value, the control unit stops the operation of the heat pump system.

8. The heat pump system according to claim 5, wherein, upon judging that the second set temperature exceeds the maximum temperature suppliable by the heat pump system, the control unit sets the second set temperature as the maximum temperature suppliable by the heat pump system.

9. The heat pump system according to claim 8, further comprising a first sub heater to heat the water circulation pipe unit, or a second sub heater to heat the hot water tank,
wherein, upon judging that the second set temperature exceeds the maximum temperature suppliable by the heat pump system, the control unit operates the first sub heater or the second sub heater.

10. A control method of a heat pump system, which has a compressor, an expander, a refrigerant circulation pipe unit, a water circulation pipe unit, a first heat exchanger to exchange heat between the refrigerant and water, a second heat exchanger to exchange heat between the refrigerant and air, a first temperature sensor installed at a part of the water circulation pipe unit at a water outlet side of the first heat exchanger, and a second temperature sensor installed at another part of the water circulation pipe unit at a water inlet side of the first heat exchanger, and circulates the water through the water circulation pipe unit to heat or cool a load, comprising:
determining a second set temperature, which is a temperature of the water outlet side of the first heat exchanger, according to a first set temperature, which is a target temperature of the load;
adjusting a temperature of the water at the water outlet side of the first heat exchanger to the second set temperature, and then circulating the water through the water circulation pipe unit;
sensing the temperature of the water at the water outlet side of the first heat exchanger through the first temperature sensor;
sensing a temperature of the water at the water inlet side of the first heat exchanger through the second temperature sensor; and
controlling the compressor or the expander according to a difference between the temperature sensed by the first temperature sensor and the temperature sensed by the second temperature sensor so as to maintain the temperature of the water at the water outlet side of the first heat exchanger at the second set temperature.

11. The control method according to claim 10, wherein the control of the compressor or the expander according to the difference between the temperature sensed by the first temperature sensor and the temperature sensed by the second temperature sensor so as to maintain the temperature of the water at the water outlet side of the first heat exchanger at the second set temperature includes:
increasing an rpm of the compressor and an opening degree of the expander, if the difference between the temperature sensed by the first temperature sensor and the temperature sensed by the second temperature sensor is increased; and
decreasing the rpm of the compressor and the opening degree of the expander, if the difference between the temperature sensed by the first temperature sensor and the temperature sensed by the second temperature sensor is decreased.

12. The control method according to claim 11, wherein, upon judging that the second set temperature does not exceed the maximum temperature suppliable by the heat pump system, the second set temperature is set to be greater than the first set temperature by a first reference value.

13. The control method according to claim 12, wherein, if the difference between the temperature sensed by the first temperature sensor and the temperature sensed by the second temperature sensor is lower than a second reference value, the operation of the heat pump system is stopped.

14. The control method according to claim 11, wherein, upon judging that the second set temperature exceeds the maximum temperature suppliable by the heat pump system, the second set temperature is set as the maximum temperature suppliable by the heat pump system.

15. The control method according to claim 14, wherein, if the difference between the temperature sensed by the first temperature sensor and the temperature sensed by the second temperature sensor is lower than a second reference value, the operation of the heat pump system is stopped.
